# EUROPÄISCHE PATENTANMELDUNG

(11) **EP 2 583 898 A2**
(43) Veröffentlichungstag der Anmeldung: **24.04.2013**
(21) Anmeldenummer: 12007251.7
(22) Anmeldetag: 18.10.2012
(51) Int. Cl.: B64D 11/06

(54) **Sitzvorrichtung, insbesondere Fluggastsitzvorrichtung**

(30) Priorität: 21.10.2011 DE 102011116539
(71) Anmelder: Recaro Aircraft Seating GmbH & Co. KG, 74523 Schwäbisch Hall (DE)
(72) Erfinder: Jussli, Zoltan, 74182 Obersulm (DE); Baumann, Jürgen, 78351 Bodman-Ludwigshafen (DE)
(74) Vertreter: Daub, Thomas

(57) **Zusammenfassung**

Die Erfindung geht aus von einer Sitzvorrichtung, insbesondere von einer Fluggastsitzvorrichtung, mit einer beweglich gelagerten Primäreinheit (10) sowie mit einer beweglich gelagerten Sekundäreinheit (12).

Es wird vorgeschlagen, dass die Sitzvorrichtung eine Verriegelungseinheit (14) aufweist, die in Abhängigkeit von zumindest einer Betriebsposition der Sekundäreinheit (12) eine Bewegung der Primäreinheit (10) relativ zu einer Aufständereinheit (16) vermeidet.

## Beschreibung

### Stand der Technik

Die Erfindung geht aus von einer Sitzvorrichtung nach dem Oberbegriff des Patentanspruchs 1.

Es ist bereits eine Sitzvorrichtung, insbesondere eine Fluggastsitzvorrichtung, mit einer beweglich gelagerten Primäreinheit sowie mit einer beweglich gelagerten Sekundäreinheit bekannt.

Es liegt der Erfindung insbesondere die Aufgabe zugrunde, eine Sicherheit für einen Passagier bzw. einen Fluggast in einem Crashfall zu erhöhen.

Diese Aufgabe wird durch eine Sitzbefestigungsvorrichtung gemäß dem Patentanspruch 1 gelöst. Weitere vorteilhafte Ausführungen der Erfindung können den Unteransprüchen entnommen werden.

### Vorteile der Erfindung

Die Erfindung geht aus von einer Sitzvorrichtung, insbesondere von einer Fluggastsitzvorrichtung, mit einer beweglich gelagerten Primäreinheit sowie mit einer beweglich gelagerten Sekundäreinheit.

Es wird vorgeschlagen, dass die Sitzvorrichtung eine Verriegelungseinheit aufweist, die in Abhängigkeit von zumindest einer Betriebsposition der Sekundäreinheit eine Bewegung der Primäreinheit relativ zu einer Aufständereinheit vermeidet, wodurch in einem Crashfall besonders hohe Kräfte von der Primäreinheit in die Aufständereinheit übertragen werden können. Unter "beweglich gelagert" soll in diesem Zusammenhang insbesondere mit zumindest einem Freiheitsgrad relativ zur Aufständereinheit verstanden werden. Unter einer "Primäreinheit" soll in diesem Zusammenhang insbesondere eine Einheit verstanden werden, die dazu vorgesehen ist, die Sekundäreinheit beweglich zu lagern. Bevorzugt weist die Primäreinheit ein Sitzteil auf. Unter einer "Sekundäreinheit" soll in diesem Zusammenhang insbesondere eine Einheit verstanden werden, die dazu vorgesehen ist, eine Körperpartie eines die Sitzvorrichtung benutzenden Fluggastes zu stützen. Dabei kann die Sekundäreinheit eine Rückenlehne, eine Armlehne und/oder besonders bevorzugt eine Fußstütze beinhalten. Unter einer "Verriegelungseinheit" soll in diesem Zusammenhang insbesondere eine Einheit verstanden werden, die in zumindest einem Betriebszustand zumindest einen Freiheitsgrad zwischen zwei Bauteilen sperrt und in zumindest einem weiteren Betriebszustand den zumindest einen Freiheitsgrad freigibt. Bevorzugt sperrt die Verriegelungseinheit in zumindest einem Betriebszustand alle Freiheitsgrade zwischen den beiden Bauteilen. Unter einer "Betriebsposition" soll in diesem Zusammenhang insbesondere eine Position verstanden werden, in welche ein Bauteil bewegt werden kann. Bevorzugt handelt es sich bei zumindest einer Betriebsposition um eine Verriegelungsposition. Unter einer "Aufständereinheit" soll in diesem Zusammenhang insbesondere eine Einheit verstanden werden, die unverlierbar an einem Boden befestigbar und dazu vorgesehen ist, die Primäreinheit relativ zum Boden zu lagern. Die Aufständereinheit kann vorzugsweise Sitzfüße, eine Tragrohreinheit und/oder einen oder mehrere Sitzteiler aufweisen und kann mehrere benachbarte Flugzeugsitze einer Sitzreihe miteinander verbinden. Unter "vorgesehen" soll insbesondere speziell programmiert, ausgelegt und/oder ausgestattet verstanden werden.

In einer weiteren Ausgestaltung der Erfindung wird vorgeschlagen, dass die Verriegelungseinheit in Abhängigkeit von zumindest einer Betriebsposition der Primäreinheit eine Bewegung der Primäreinheit relativ zur Aufständereinheit vermeidet, wodurch eine Betriebssicherheit weiter erhöht werden kann.

Des Weiteren wird vorgeschlagen, dass die Verriegelungseinheit ein Verriegelungsmittel aufweist, das an der Aufständereinheit schwenkbar gelagert ist, wodurch ein besonders einfacher und sicherer Verriegelungsmechanismus erreicht werden kann. Unter einem "Verriegelungsmittel" soll in diesem Zusammenhang insbesondere ein Mittel verstanden werden, das dazu vorgesehen ist, eine Verriegelungsmechanik anzutreiben.

Weist die Sitzvorrichtung eine schwenkbare Sitzfußeinheit auf, die dazu vorgesehen ist, in einem verriegelten Zustand einen Formschluss mit einem Verriegelungsbolzen der Verriegelungseinheit zu bilden, können weitere Verriegelungsbauteile vorteilhaft vermieden werden. Unter einer "Sitzfußeinheit" soll in diesem Zusammenhang insbesondere eine Einheit verstanden werden, die einen Sitzfuß der Sitzvorrichtung bildet.

Ferner wird vorgeschlagen, dass die Sitzvorrichtung eine Kulissenführung aufweist, in welcher der Verriegelungsbolzen der Aufständereinheit geführt ist, wodurch auf besonders einfache Weise eine Führung und/oder ein Anschlag für den Verriegelungsbolzen erreicht werden kann.

Des Weiteren wird vorgeschlagen, dass die Verriegelungseinheit ein Federelement aufweist, das dazu vorgesehen ist, das Verriegelungsmittel in eine vordefinierte Ausgangsposition zu lenken, wodurch das Verriegelungsmittel, insbesondere bei Vibrationen und/oder Turbulenzen, sicher in der Ausgangsposition gehalten werden kann.

In einer weiteren Ausgestaltung der Erfindung wird vorgeschlagen, dass die Sekundäreinheit ein Anlagemittel aufweist, das in zumindest einer Betriebsposition an einem Verriegelungsmittel der Verriegelungseinheit anliegt. Dadurch kann das Verriegelungsmittel durch die Sekundäreinheit auf besonders einfache Weise, insbesondere auch entgegen einer Federkraft, ausgelenkt werden.

Ein konstruktiv einfacher Aufbau bei hohem Sitzkomfort der Sitzvorrichtung kann erreicht werden, wenn die Primäreinheit einen Sitzboden aufweist, der relativ zur Aufständereinheit zumindest linear verschiebbar gelagert ist.

Ein Sitzkomfort der Sitzvorrichtung kann weiter gesteigert werden, wenn die Primäreinheit einen Sitzboden aufweist, der relativ zur Aufständereinheit zumindest schwenkbar gelagert ist.

Weist die Sitzfußeinheit zumindest ein Sitzfußmittel auf, das an der Aufständereinheit und an der Primäreinheit schwenkbar gelagert und dazu vorgesehen ist, in einem verriegelten Zustand Kräfte von der Primäreinheit in die Aufständereinheit abzuleiten, können zusätzliche, die Primäreinheit stützende Bauteile eingespart werden.

Umfasst die Sekundäreinheit eine Beinauflage, die um eine Schwenkachse schwenkbar gelagert ist, kann ein Sitzkomfort für einen Fluggast weiter vorteilhaft gesteigert werden.

Ist die Schwenkachse ortsfest an der Primäreinheit angeordnet, kann eine einfache Schwenkverbindung der Beinauflage mit der Primäreinheit erreicht werden.

In einer weiteren Ausgestaltung der Erfindung wird vorgeschlagen, dass die Sitzvorrichtung eine Rückenlehneneinheit aufweist, die an der Primäreinheit schwenkbar gelagert ist. Dadurch kann ein Sitzkomfort für einen Fluggast weiter gesteigert werden.

### Zeichnung

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Seitenansicht einer Sitzvorrichtung in einem verriegelten Zustand,
- Fig. 2: eine Seitenansicht der Sitzvorrichtung nach Figur 1 in einem entriegelten Zustand und
- Fig. 3: eine Seitenansicht einer Sitzvorrichtung nach Figur 1 in einer Komfortposition.

### Beschreibung des Ausführungsbeispiels

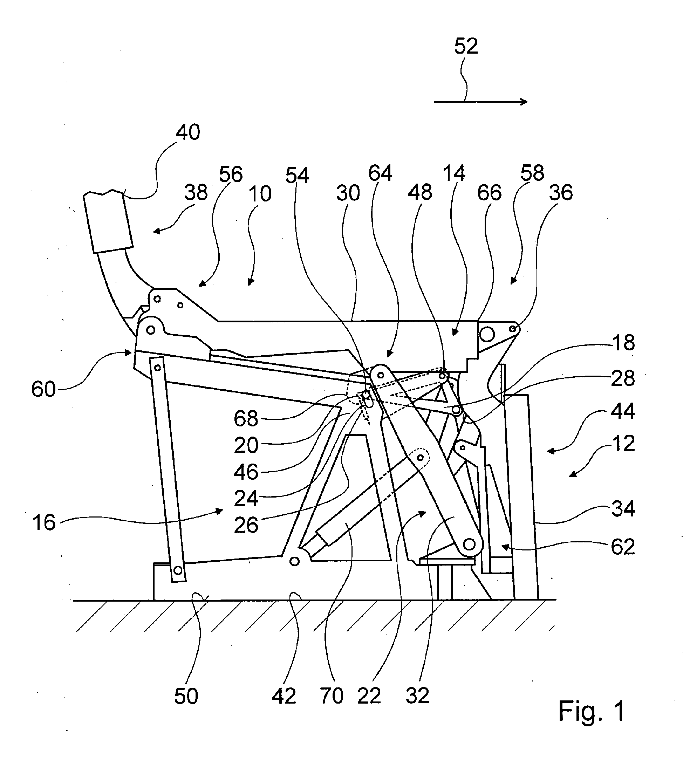

Figur 1 zeigt eine erfindungsgemäße Sitzvorrichtung, die als Fluggastsitzvorrichtung ausgebildet ist, in einer Seitenansicht. Hierbei ist es ebenfalls denkbar, die Sitzvorrichtung in anderen Fortbewegungsmitteln einzusetzen, wie beispielsweise in Kraftfahrzeugen oder Personenschiffen. Auch ein Einsatz der Sitzvorrichtung in Gebäuden ist prinzipiell denkbar. Die Sitzvorrichtung befindet sich in einer aufrechten, verriegelten Position, dem Fachmann als TTL-Position bekannt, welche aus Sicherheitsgründen während eines Start-, Lande-, und Rollvorgangs eingenommen werden muss.

Die Sitzvorrichtung weist eine beweglich gelagerte Primäreinheit 10 auf, an welche eine beweglich gelagerte Sekundäreinheit 12 angeordnet ist. Die Primäreinheit 10 weist einen Sitzboden 30 auf. Es ist in diesem Zusammenhang jedoch auch denkbar, dass die Primäreinheit 10 ein anderes, dem Fachmann als sinnvoll erscheinendes Bauteil, wie beispielsweise eine Fußstütze, eine Rückenlehne oder eine Armlehne, umfasst. Die Sekundäreinheit 12 ist von einer Fußstützeinheit gebildet. Es ist in diesem Zusammenhang jedoch auch denkbar, dass die Sekundäreinheit von einem anderen, dem Fachmann als sinnvoll erscheinenden Bauteil, wie beispielsweise einem Sitzboden, einer Rückenlehne oder einer Armlehne, gebildet ist.

Die Primäreinheit 10 ist im verriegelten Zustand unbeweglich an eine Aufständereinheit 16 gekoppelt. Die Aufständereinheit 16 ist unverlierbar und unbeweglich mit einem Kabinenboden 42 verbunden. Die Sekundäreinheit 12 ist über eine Schwenkachse 36 mit der Primäreinheit 10 verbunden. Eine elektrische Antriebseinheit 44 hält eine Stellposition der Sekundäreinheit 12 relativ zur Primäreinheit 10. Es sind in diesem Zusammenhang auch hydraulische und/oder von Hand betriebene Antriebseinheiten zur Verstellung und Festlegung der Stellposition der Sekundäreinheit 12 denkbar. Die Sekundäreinheit 12 umfasst eine Beinauflage 34, die um die Schwenkachse 36 schwenkbar gelagert ist. Die Schwenkachse 36 ist ortsfest an der Primäreinheit 10 angeordnet.

Die Sitzvorrichtung weist eine Verriegelungseinheit 14 auf. Die Verriegelungseinheit 14 vermeidet eine Bewegung der Primäreinheit 10 relativ zur Aufständereinheit 16 in Abhängigkeit von einer Betriebsposition der Sekundäreinheit 12. In Figur 1 befindet sich die Sekundäreinheit 12 in einer Verriegelungsposition. Ferner befindet sich die Primäreinheit 10 in einer Verriegelungsposition.

Die Verriegelungseinheit 14 weist zum Verriegeln der Primäreinheit 10 ein als dreieckiger Hebelarm ausgebildetes Verriegelungsmittel 18 und einen an einem Ende des Verriegelungsmittels 18 angeordneten Verriegelungsbolzen 20 auf. Das Verriegelungsmittel 18 ist an einem Aufständerbein 46 der Aufständereinheit 16 um eine Schwenkachse 48 schwenkbar gelagert. Die Schwenkachse 48 verläuft dabei parallel zu einer Aufständerebene 50 und senkrecht zu einer Sitzrichtung 52. Die Sitzrichtung 52 verläuft dabei parallel zum Kabinenboden 42 und in einer aufrechten Position der Sitzvorrichtung senkrecht zu einer Vorderkante des Sitzbodens 30, wobei die Vorderkante der Sitzfläche zur Stützung eines unteren Teils der Oberschenkel und des Kniebereichs eines sitzenden Passagiers dient. Die Sitzrichtung 52 kann der Transportrichtung des Transportmittels entsprechen. Insbesondere bei der Anwendung in einer Flugzeugkabine entspricht die Sitzrichtung 52 einer Flugrichtung. Bei der Anwendung in einem Eisenbahnwagen, einem Reisebus oder einem Passagierschiff kann die Sitzrichtung entgegen der Transportrichtung oder quer dazu ausgerichtet sein.

Der Sitzboden 30 ist in einem hinteren Bereich 56 über eine Linearführungseinheit 60 an der Aufständereinheit 16 geführt. Der Sitzboden 30 ist in einem entriegelten Zustand relativ zur Aufständereinheit 16 linear und gleichzeitig schwenkbar bewegbar. In einem vorderen Bereich 58 des Sitzbodens 30 ist der Sitzboden 30 mit einer schwenkbaren Sitzfußeinheit 22 verbunden. Die Sitzfußeinheit 22 weist ein Sitzfußmittel 32 auf, das an einem dem Kabinenboden 42 zugewandten Ende 62 an der Aufständereinheit 16 schwenkbar gelagert ist. An einem dem Kabinenboden 42 abgewandten Ende 64 ist das Sitzfußmittel 32 mit dem Sitzboden 30 schwenkbar verbunden. Somit führt eine vordere Sitzkante 66 des Sitzbodens 30 bei einer linearen Bewegung des Sitzbodens 30 in Sitzrichtung 52 relativ zur Aufständereinheit 16 eine im Wesentlichen bogenförmige Bewegung aus.

Der Verriegelungsbolzen 20 beschreibt bei einem Verriegelungs- und Entriegelungsvorgang eine Kreisbahn 54. Der Verriegelungsbolzen 20 ist in einer Kulissenführung 24 geführt. Die Kulissenführung 24 ist innerhalb des Aufständerbeins 46 angeordnet. Die Kulissenführung 24 begrenzt eine Schwenkmöglichkeit des Verriegelungsbolzens 20. Die Sekundäreinheit 12 weist ein Anlagemittel 28 auf, das in einem verriegelten Zustand am Verriegelungsmittel 18 der Verriegelungseinheit 14 anliegt. Das Anlagemittel 28 übt auf das Verriegelungsmittel 18 eine Kraft aus, die im Wesentlichen entgegen der Sitzrichtung 52 ausgerichtet ist. Über die Schwenkachse 48 wird so der Verriegelungsbolzen 20 in Richtung Sitzboden 30 gelenkt. Der Verriegelungsbolzen 20 liegt im verriegelten Zustand an einem oberen Ende der Kulissenführung 24 an.

Die Verriegelungseinheit 14 weist ferner ein Federelement 26 auf, das am Verriegelungsmittel 18 sowie an der Aufständereinheit 16 angeordnet ist. Das Federelement 26 übt eine Kraft auf das Verriegelungsmittel 18 aus, die entgegen der vom Anlagemittel 28 ausgeübten Kraft wirkt. Das Federelement 26 ist dabei von einer Zugfeder gebildet. Es ist in diesem Zusammenhang jedoch auch denkbar, andere, dem Fachmann als sinnvoll erscheinende Federelemente, wie beispielsweise Gasdruckfedern, Schraubenfedern, Biegefedern und/oder Torsionsfedern, einzusetzen.

Im gezeigten verriegelten Zustand hintergreift der Verriegelungsbolzen 20 einen Verriegelungsanschlag 68, der einstückig mit dem Sitzfußmittel 32 ausgebildet ist. Das Sitzfußmittel 32 liegt rückwärtig am Aufständerbein 46 der Aufständereinheit 16 an. Der Verriegelungsbolzen 20 liegt formschlüssig am Sitzfußmittel 32 und am Verriegelungsanschlag 68 an. Die Anlage am Verriegelungsanschlag 68 vermeidet eine Schwenkbewegung des Sitzfußmittels 32. Vom Sitzboden 30 ausgeübte Kräfte, insbesondere in einem Crashfall in Sitzrichtung 52, werden über die Verriegelungseinheit 14 direkt in die Aufständereinheit 16 übertragen. Das Sitzfußmittel 32 ist somit in TTL-Position entlastet.

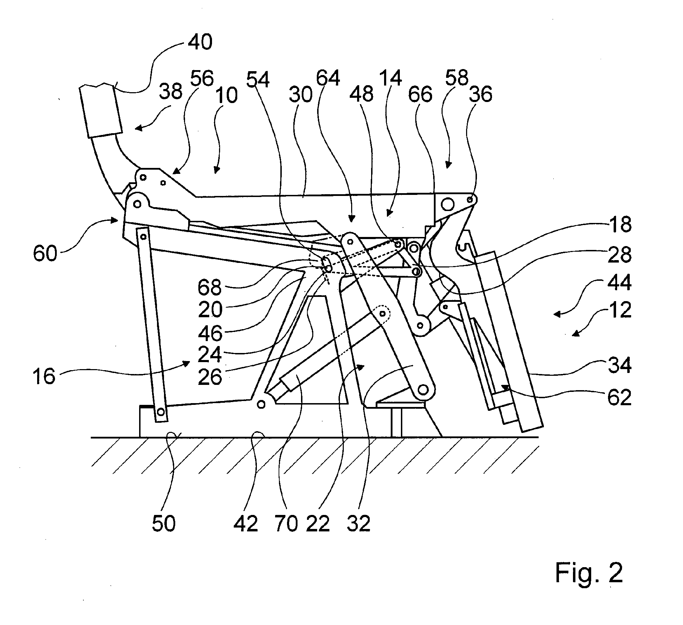

Um den Sitz aus der in Figur 1 gezeigten TTL-Position in eine Komfortposition zu fahren, wird in einem ersten Entriegelungsschritt die Beinauflage 34 der Sekundäreinheit 12 um die Schwenkachse 36 geschwenkt (Figur 2). Dabei bewegt sich das Anlagemittel 28 im Wesentlichen in Sitzrichtung 52 und gibt das Verriegelungsmittel 18 frei. Das Verriegelungsmittel 18 schwenkt, von einer von dem Federelement 26 erzeugten Federkraft getrieben, um die Schwenkachse 48. Der Verriegelungsbolzen 20 bewegt sich dabei vom Sitzboden 30 weg und gibt den Formschluss mit dem Verriegelungsanschlag 68 des Sitzfußmittels 32 frei. Die am Sitzfußmittel 32 schwenkbar gelagerte Primäreinheit 10 ist somit ebenfalls entriegelt und kann in einem weiteren Schwenkvorgang in Sitzrichtung 52 geführt werden. Eine hydraulische Antriebseinheit 70 bewegt hierzu das Sitzfußmittel 32 und mithin die Primäreinheit 10 in die Komfortposition. Es sind in diesem Zusammenhang auch elektrische und/oder von Hand betriebene Antriebseinheiten zur Verstellung und Festlegung der Stellposition der Primäreinheit 10 denkbar.

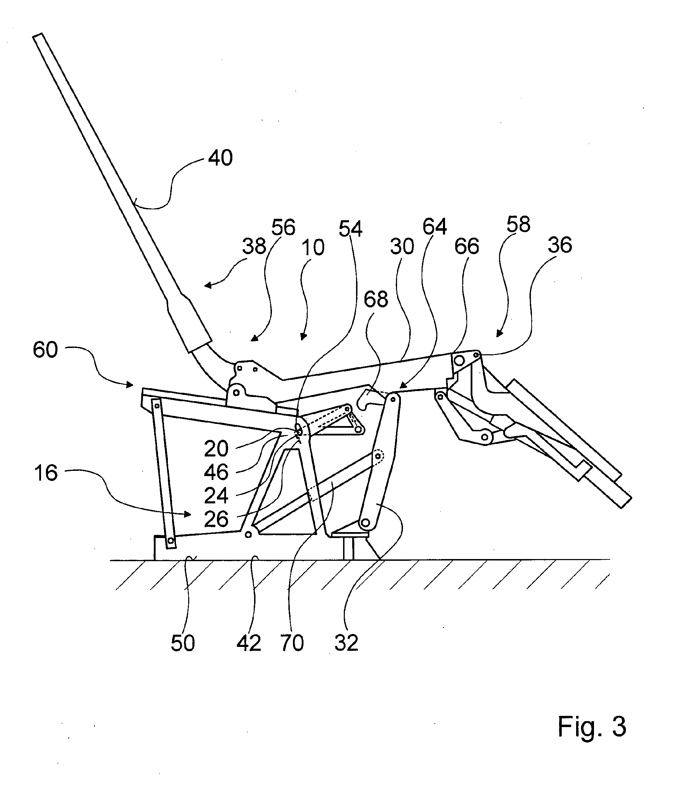

Figur 3 zeigt die Sitzvorrichtung in einer Komfortposition. Der Sitzboden 30 ist in Sitzrichtung 52 verschoben. Die Sitzvorrichtung weist eine Rückenlehneneinheit 38 auf, die eine Rückenstützfläche 40 umfasst, die zur Abstützung eines Rückens eines sitzenden Passagiers vorgesehen ist. Die Rückenstützfläche 40 befindet sich in der TTL-Position in einer im Wesentlichen aufrechten Position. Beim Verfahren der Sitzvorrichtung in die Komfortposition neigt sich die Rückenlehneneinheit 38 zusammen mit dem Sitzboden 30.

Ein Zurückfahren der Sitzvorrichtung in den verriegelten Zustand erfolgt in entsprechend umgekehrter Reihenfolge. Zunächst verfährt der Sitzboden 30 entgegen der Sitzrichtung 52 in die TTL-Position. Anschließend verfährt die Beinauflage 34 zurück in TTL-Position und drückt dabei mit dem Anlagemittel 28 das Verriegelungsmittel 18 entgegen der Federkraft des Federelements 26 in die Verriegelungsposition. Der Verriegelungsbolzen 20 greift hinter den Verriegelungsanschlag 68.

### Bezugszeichen

- 10: Primäreinheit
- 12: Sekundäreinheit
- 14: Verriegelungseinheit
- 16: Aufständereinheit
- 18: Verriegelungsmittel
- 20: Verriegelungsbolzen
- 22: Sitzfußeinheit
- 24: Kulissenführung
- 26: Federelement
- 28: Anlagemittel
- 30: Sitzboden
- 32: Sitzfußmittel
- 34: Beinauflage
- 36: Schwenkachse
- 38: Rückenlehneneinheit
- 40: Rückenstützfläche
- 42: Kabinenboden
- 44: Antriebseinheit
- 46: Aufständerbein
- 48: Schwenkachse
- 50: Aufständerebene
- 52: Sitzrichtung
- 54: Kreisbahn
- 56: Bereich
- 58: Bereich
- 60: Linearführungseinheit
- 62: Ende
- 64: Ende
- 66: Sitzkante
- 68: Verriegelungsanschlag
- 70: Antriebseinheit

## Patentansprüche

1. Sitzvorrichtung, insbesondere Fluggastsitzvorrichtung, mit einer beweglich gelagerten Primäreinheit (10) sowie mit einer beweglich gelagerten Sekundäreinheit (12), **gekennzeichnet durch** eine Verriegelungseinheit (14), die in Abhängigkeit von zumindest einer Betriebsposition der Sekundäreinheit (12) eine Bewegung der Primäreinheit (10) relativ zu einer Aufständereinheit (16) vermeidet.

2. Sitzvorrichtung nach Anspruch 1, **dadurch gekennzeichnet, dass** die Verriegelungseinheit (14) in Abhängigkeit von zumindest einer Betriebsposition der Primäreinheit (10) eine Bewegung der Primäreinheit (10) relativ zur Aufständereinheit (16) vermeidet.

3. Sitzvorrichtung nach Anspruch 1 oder 2, **dadurch gekennzeichnet, dass** die Verriegelungseinheit (14) ein Verriegelungsmittel (18) aufweist, das an der Aufständereinheit (16) schwenkbar gelagert ist.

4. Sitzvorrichtung nach einem der vorhergehenden Ansprüche, **gekennzeichnet durch** eine schwenkbare Sitzfußeinheit (22), die dazu vorgesehen ist, in einem verriegelten Zustand einen Formschluss mit einem Verriegelungsbolzen (20) der Verriegelungseinheit (14) zu bilden.

5. Sitzvorrichtung nach Anspruch 4, **gekennzeichnet durch** eine Kulissenführung (24), in welcher der Verriegelungsbolzen (20) der Aufständereinheit (16) geführt ist.

6. Sitzvorrichtung zumindest nach Anspruch 3, **dadurch gekennzeichnet, dass** die Verriegelungseinheit (14) ein Federelement (26) aufweist, das dazu vorgesehen ist, das Verriegelungsmittel (18) in eine vordefinierte Ausgangsposition zu lenken.

7. Sitzvorrichtung nach einem der vorhergehenden Ansprüche, **dadurch gekennzeichnet, dass** die Sekundäreinheit (12) ein Anlagemittel (28) aufweist, das in zumindest einer Betriebsposition an einem Verriegelungsmittel (18) der Verriegelungseinheit (14) anliegt.

8. Sitzvorrichtung nach einem der vorhergehenden Ansprüche, **dadurch gekennzeichnet, dass** die Primäreinheit (10) einen Sitzboden (30) aufweist, der relativ zur Aufständereinheit (16) zumindest linear verschiebbar gelagert ist.

9. Sitzvorrichtung nach einem der vorhergehenden Ansprüche, **dadurch gekennzeichnet, dass** die Primäreinheit (10) einen Sitzboden (30) aufweist, der relativ zur Aufständereinheit (16) zumindest schwenkbar gelagert ist.

10. Sitzvorrichtung zumindest nach Anspruch 3, **dadurch gekennzeichnet, dass** die Sitzfußeinheit (22) zumindest ein Sitzfußmittel (32) aufweist, das an der Aufständereinheit (16) und an der Primäreinheit (10) schwenkbar gelagert und dazu vorgesehen ist, in einem verriegelten Zustand Kräfte von der Primäreinheit (10) in die Aufständereinheit (16) abzuleiten.

11. Sitzvorrichtung nach einem der vorhergehenden Ansprüche, **dadurch gekennzeichnet, dass** die Sekundäreinheit (12) eine Beinauflage (34) umfasst, die um eine Schwenkachse (36) schwenkbar gelagert ist.

12. Sitzvorrichtung nach Anspruch 11, **dadurch gekennzeichnet, dass** die Schwenkachse (36) ortsfest an der Primäreinheit (10) angeordnet ist.

13. Sitzvorrichtung nach einem der vorhergehenden Ansprüche, **gekennzeichnet durch** eine Rückenlehneneinheit (38), die an der Primäreinheit (10) schwenkbar gelagert ist.

14. Sitz, insbesondere Fluggastsitz, mit einer Sitzvorrichtung nach einem der vorhergehenden Ansprüche.
